# EUROPÄISCHE PATENTSCHRIFT

(11) **EP 3 507 074 B1**
(45) Veröffentlichungstag und Bekanntmachung des Hinweises auf die Patenterteilung: **04.11.2020**
(21) Anmeldenummer: 17764502.5
(22) Anmeldetag: 30.08.2017
(51) Int. Cl.: B29C 64/135

(54) **VERFAHREN ZUM VERFESTIGEN EINES PHOTOPOLYMERISIERBAREN, DIFFUS REFLEKTIERENDEN MATERIALS**
METHOD FOR REINFORCING A PHOTOPOLYMERIZABLE DIFFUSE REFLECTIVE MATERIAL
PROCÉDÉ DE CONSOLIDATION D'UN MATÉRIAU RÉFLÉCHISSANT DE MANIÈRE DIFFUSE ET PHOTOPOLYMÉRILISABLE.

(30) Priorität: 30.08.2016 EP 16450022
(43) Veröffentlichungstag der Anmeldung: 10.07.2019
(73) Patentinhaber: Lithoz GmbH, 1060 Wien (AT)
(72) Erfinder: REITER, Rafael, 1090 Wien (AT)
(74) Vertreter: Keschmann, Marc
(86) Internationale Anmeldenummer: PCT/AT2017/000059
(87) Internationale Veröffentlichungsnummer: WO 2018/039688

(56) Entgegenhaltungen:
- WO-A1-2015/128783
- GB-A- 2 477 828

## Beschreibung

Die Erfindung betrifft ein Verfahren zum Verfestigen eines photopolymerisierbaren, diffus reflektierenden Materials durch Bestrahlung, wobei das Material ein transparentes Materialbegrenzungselement, wie z.B. eine Materialauflage oder einen Wannenboden, benetzt und die Bestrahlung einer zu verfestigenden Fläche durch das transparente Materialbegrenzungselement hindurch in das Material erfolgt, sowie eine Vorrichtung zur Durchführung eines solchen Verfahrens.

Die Erfindung betrifft weiters ein Verfahren zum schichtweisen Aufbau eines Formkörpers aus photopolymerisierbarem, diffus reflektierenden Material, insbesondere einem Harz mit keramischem oder metallischem Füllstoff, bei dem nacheinander Formkörperschichten übereinander ausgebildet werden, indem jeweils auf dem Materialbegrenzungselement eine Materialschicht vorgegebener Dicke des photopolymerisierbaren Materials ausgebildet wird und eine Bauplattform oder der an der Bauplattform zumindest teilweise aufgebaute Formkörper in die Materialschicht abgesenkt wird, sodass sich zwischen der Bauplattform bzw. dem Formkörper und dem Wannenboden eine zu verfestigende Schicht des Materials ausbildet, die durch Bestrahlung durch das Materialbegrenzungselement hindurch ortsselektiv zur Ausbildung der gewünschten Form der Formkörperschicht verfestigt wird.

Bei einer der vorherrschenden Techniken der additiven Fertigung bzw. des 3D-Drucks, der Stereolithographie, werden einzelne Schichten eines Formkörpers durch ortsselektive Belichtung ausgehärtet, wodurch sukzessive der gewünschte Körper in seiner dreidimensionalen Form hergestellt wird. Das photopolymerisierbare Ausgangsmaterial kann sich aus verschiedenen Komponenten zusammensetzen. Im eingangs genannten Verfahren handelt es sich um ein diffus reflektierendes Material, wie es bei der additiven Fertigung von Formkörpern aus Keramik verwendet wird. Ein solches keramikgefülltes Material ist eine Suspension aus Komponenten verschiedener Brechungsindizes. Das führt zur Streuung bzw. Umverteilung des Lichtes, das zur Aushärtung des Materials eingebracht wird, und damit zu Kontrastschwächung und zu einer Reihe von Fehlern, die bei ungefüllten transparenten Ausgangsmaterialien nicht auftreten.

Das eingangs genannte Verfahren beschäftigt sich im Speziellen mit der Situation, dass das photopolymerisierbare Material durch ein transparentes Materialbegrenzungselement hindurch belichtet wird, das vom Material unmittelbar benetzt ist. Das Materialbegrenzungselement ist üblicherweise Teil einer Wanne, die das im Prozess verwendete photopolymerisierbare Material beinhaltet, was dem Materialbegrenzungselement mechanische Stabilität abverlangt. Bei anderen Verfahren ist das Materialbegrenzungselement nur eine dünne Folie oder setzt sich aus mehreren Komponenten zusammen, die verschiedene elastische und optische Eigenschaften aufweisen.

Eine mögliche Anwendung des Verfahrens oder der Vorrichtung der eingangs genannte Art ist in der WO 2010/045950 A1 und in der EP 2505341 A1 beschrieben. Die dort beschriebenen Verfahren dienen zum schichtweisen Aufbau eines Formkörpers unter Anwendung einer lithographiebasierten generativen Fertigung, zum Beispiel Rapid Prototyping. Dabei wird eine definierte Schicht aus photopolymerisierbarem Material, das sich in einer Wanne mit einem transparenten Wannenboden, also Materialbegrenzungselement, auf folgende Weise gebildet. Eine vertikal gesteuert bewegliche Bauplattform wird von einem Hubmechanismus getragen und ist an der Wanne so angeordnet, dass sie unter Steuerung einer Steuereinheit durch den Hubmechanismus vertikal angehoben und abgesenkt werden kann. Durch Absenken der Bauplattform in das photopolymerisierbare Material in der Wanne wird Material aus dem Zwischenraum zwischen der Unterseite der Bauplattform und dem Wannenboden verdrängt und eine Materialschicht definierter Dicke erzeugt. Diese Schicht wird dann durch ortsselektive Belichtung von unten durch den transparenten Wannenboden belichtet, um dadurch die Schicht in der gewünschten Geometrie an der Bauplattform auszuhärten. Anschließend wird die Bauplattform mit der daran ausgehärteten ersten Schicht angehoben und photopolymerisierbares Material in den belichteten Bereich nachgeführt. Diese Schritte werden wiederholt, um so den Formkörper aus aufeinanderfolgenden Schichten aufzubauen, wobei aber die Schicht aus photopolymerisierbarem Material nun nicht von der Bauplattform, sondern vom unfertigen Formkörper definiert wird. Die wo 2015/128783 A1 beschreibt ebenfalls ein Verfahren und eine Vorrichtung zum Verfestigen eines photopolymerisierbaren Materials.

Wie oben erwähnt, befindet sich im Allgemeinen das photopolymerisierbare Material in einer Wanne, die mit einem durchsichtigen, von Material benetztem Materialbegrenzungselement ausgestattet ist. Durch dieses Materialbegrenzungselement wird durch ortsselektive Belichtung eine Schicht ausgehärtet. Die optischen Eigenschaften des über die Lichtquelle und ihr Projektionssystem hinausgehenden Strahlenganges sowie die optischen und photochemischen Eigenschaften des photopolymerisierbaren Materials verhindern im Regelfall, dass die Geometrie der ausgehärteten Schicht der Geometrie des reellen Bildes, das vom Projektor erzeugt wird, entspricht. Die Projektion geometrisch korrekter digitaler Bilddaten führt also zur Herstellung von Formkörpern mit fehlerhafter Geometrie.

Die Komponenten, die in photopolymerisierbarem Material enthalten sind, können unterschiedliche optische Eigenschaften aufweisen. Der in der vorliegenden Erfindung relevante Effekt ist ein Unterschied im Brechungsindex der durchsichtigen Komponenten. An jeder Grenzfläche zwischen zwei Materialien mit unterschiedlichen Brechungsindices findet Lichtbrechung statt. Die Komponenten befinden sich üblicherweise in Suspension, d.h. die Größe der Tröpfchen oder Körner befindet sich im µm-Bereich, und es entstehen zahlreiche Grenzflächen. Wenn Lichtstrahlen von vielen, zueinander zufällig ausgerichteten Grenzflächen gebrochen werden, wird das Licht in alle Richtungen umverteilt bzw. gestreut. Ein Teil des ins Material eingestrahlten Lichtes tritt aus der Oberfläche am oder nahe des Einstrahlpunktes wieder aus dem Material aus. Dieser Effekt wird als diffuse Reflexion bezeichnet.

Dieses diffus reflektierte Licht gelangt wieder in das transparente Materialbegrenzungselement zurück und wird vom Boden und dem Mantel des Materialbegrenzungselements, d.h. den Grenzschichten zwischen dem Materialbegrenzungselement und Luft, zu verschiedenen Teilen transmittiert, normal reflektiert und/oder total reflektiert. Das transparente Materialbegrenzungselement besteht als Festkörper üblicherweise aus einem Medium mit signifikant höherem Brechungsindex als Luft, was zu Lichtbrechung und zu den erwähnten Phänomenen führt. Das Licht kann durch einfache oder mehrfache Reflexion zum Material zurück gelangen, was effektiv eine Senkung des Bildkontrasts darstellt und zu signifikanten Fehlern in der Schichtgeometrie führt.

Der Einfluss der Totalreflexion ist besonders hoch, da das vom photopolymerisierbaren Material diffus reflektierte Licht in voller Intensität wieder zum Material zurückreflektiert wird.

Üblicherweise auftretende Fehler mit dieser Ursache sind die Vergrößerung einzelner Formkörper oder von einzelnen Bereichen innerhalb eines Formkörpers, das Zuwachsen von erwünschten Hohlräumen bzw. Löchern im Formkörper sowie das Zusammenwachsen von ursprünglich voneinander getrennt auszubildenden Formkörpern, im Extremfall über Abstände von mehreren Zentimetern.

Die vorliegende Erfindung zielt daher darauf ab, ein Verfahren und eine Vorrichtung der eingangs genannten Art dahingehend zu verbessern, dass das Auftreten der oben genannten Fehler vermieden oder zumindest reduziert wird.

Zur Lösung dieser Aufgabe sieht die Erfindung ein Verfahren der eingangs genannten Art zum Verfestigen eines photopolymerisierbaren, diffus reflektierenden Materials im Wesentlichen vor, dass a) die Dicke des Materialbegrenzungselements und b) die benetzte Fläche und/oder das Baufeld und/oder die zu verfestigende Fläche des Materials derart aufeinander abgestimmt werden, dass weniger als 40%, bevorzugt weniger als 30%, besonders bevorzugt weniger als 20%, insbesondere weniger als 10%, der vom Material in das Materialbegrenzungselement reflektierten Strahlung im Materialbegrenzungselement oder an dessen Oberflächen in das Material, insbesondere in das Baufeld, vorzugsweise in die zu verfestigende Fläche zurückreflektiert wird.

Gemäß einem Aspekt der Erfindung ist bei einem Verfahren der eingangs genannten Art zum Verfestigen eines photopolymerisierbaren, diffus reflektierenden Materials im Wesentlichen vorgesehen, dass a) die Dicke des Materialbegrenzungselements und b) die benetzte Fläche und/oder das Baufeld und/oder die zu verfestigende Fläche des Materials derart aufeinander abgestimmt werden, dass die Dicke des Materialbegrenzungselements mindestens 1/4, bevorzugt mindestens 1/3, bevorzugt mindestens 1/2 des Durchmessers der benetzten Fläche bzw. der zu verfestigenden Fläche bzw. des Baufelds beträgt, und zwar insbesondere derart, dass weniger als 40%, bevorzugt weniger als 30%, besonders bevorzugt weniger als 20%, insbesondere weniger als 10%, der vom Material in das Materialbegrenzungselement reflektierten Strahlung im Materialbegrenzungselement oder an dessen Oberflächen in das Material, insbesondere in das Baufeld, vorzugsweise in die zu verfestigende Fläche zurückreflektiert wird.

Die innerhalb des Materialbegrenzungselements entstehenden Reflexionen, die den Kontrast senken und das Belichtungsergebnis negativ beeinflussen, werden somit auf ein Minimum zu reduziert. Insbesondere wird eine Veränderung der optischen Parameter des Strahlengangs erzielt, indem die Dicke des Materialbegrenzungselements und die benetzte Fläche und/oder die direkt bestrahlte, d.h. zu verfestigende Fläche des Materials aufeinander abgestimmt werden.

Die Erfindung beruht dabei auf den folgenden physikalischen Zusammenhängen. Die für das Verfestigen des photopolymerisierbaren Materials genutzte elektromagnetische Strahlung (1. Licht) tritt zunächst in die Eintrittsfläche des transparenten Materialbegrenzungselements ein und dann durch die gegenüberliegende Austrittsfläche des Materialbegrenzungselements in das zu verfestigende Material, welches das Materialbegrenzungselement benetzt. Ein signifikanter Teil davon (2. Licht) wird vom Material diffus in das Materialbegrenzungselement zurück reflektiert. Dort wird ein signifikanter Teil der reflektierten Strahlung wiederum vom Boden des Materialbegrenzungselements, d.h. der genannten Eintrittsfläche, und den Mantel- bzw. Seitenflächen des Materialbegrenzungselements über eine oder mehrere Reflexionen zum Material zurückgebracht (3. Licht), was bei einer herkömmlichen Anordnung mit einem Materialbegrenzungselement mit relativ geringer Dicke ca. 50% (durch Totalreflexion) sowie ca. 4% (durch Reflexion) des 2. Lichts ausmachen kann.

Ein rückgestreuter Lichtstrahl (2. Licht) wird an der Strahleintrittsfläche normal reflektiert, wenn der Winkel zwischen der Grenzflächennormalen und dem Strahl kleiner ist als der sich aus den Brechungsindices an der Grenzfläche, d.h. des Materialbegrenzungselements und in der Regel Luft, ergebende kritische Winkel ϑ_{c}. Ein rückgestreuter Strahl (2. Licht) wird hingegen total reflektiert, wenn der Winkel zwischen der Grenzflächennormalen und dem Strahl größer ist als der kritische Winkel ϑ_{c} (d.h. der Strahl geht mehr in Richtung des Randes des Materialbegrenzungselements), wobei der gesamte Strahl auf Grund der Totalreflexion zum Material zurückreflektiert wird.

Als kritischer Radius r_{c} wird hierbei der Radius des Kreises um den Austrittspunkt der diffusen Reflexion im Material bezeichnet, der sich durch den kritischen Winkel als Mindestradius für das Zurückgelangen von totalreflektiertem Licht ergibt.

Je größer die Dicke des Materialbegrenzungselements nun gewählt wird, d.h. je länger der vom totalreflektierten Strahl zurückgelegte Weg ist, desto größer ist der kritische Radius. Je größer der kritische Radius ist, desto geringer ist der Anteil der totalreflektierten Strahlen, die in das das Materialbegrenzungselement benetzende, insbesondere das zu verfestigende Material, gelangen.

Der Anteil der totalreflektierten Strahlen, die in das Material gelangen, hängt aber auch von der Größe der benetzten Fläche bzw. der zu verfestigenden/direkt bestrahlten (1. Licht) Fläche des Material ab. Je kleiner die benetzte Fläche oder die zu verfestigende Fläche des Materials gewählt wird, desto geringer ist der Anteil der totalreflektierten Strahlung, die in das Material trifft.

Wenn im Rahmen der Erfindung die Dicke des Materialbegrenzungselements und die Größe der benetzten Fläche aufeinander abgestimmt werden, erfolgt dies im Hinblick auf die Reduzierung des in die benetze Fläche totalreflektierten Strahlungsanteils, wobei die benetzte Fläche die zu verfestigende bzw. direkt bestrahlte (1. Licht) Fläche des Materials umfasst. Wenn im Rahmen der Erfindung hingegen die Dicke des Materialbegrenzungselements und die Größe der zu verfestigenden Fläche des Materials aufeinander abgestimmt werden, erfolgt dies lediglich im Hinblick auf die Reduzierung des in die zu verfestigende Fläche totalreflektierten Strahlungsanteils, sodass in Kauf genommen wird, dass der in die die zu verfestigende Fläche außen umgebende benetzte Fläche total reflektierte Strahlungsanteil ggf. nicht oder in geringerem Ausmaß reduziert wird. Dies führt zwar nicht zu einer direkten Erhöhung des Auftretens von Formbildungsfehlern bzw. -ungenauigkeiten in dem zu verfestigenden Bereich, jedoch bewirkt die in das die zu verfestigende Fläche außen umgebende Material totalreflektierte Strahlung dort einerseits Materialveränderungen und ggf. -verfestigungen, die in nachfolgenden Prozessschritten nachteilig sind, weil das davon betroffene Material im Zuge des Materialnachführens dann in den zu verfestigenden Bereich gelangen kann. Andererseits wird die in das umgebende Material totalreflektierte Strahlung dort wiederum diffus reflektiert, was wiederum zu unkontrollierter Strahlungsverteilung u.a. in den zu verfestigenden Bereich führen kann.

Die Reduzierung der (total)reflektierten Strahlung auf weniger als 40%, bevorzugt weniger als 30%, besonders bevorzugt weniger als 20%, insbesondere weniger als 10%, wird gemäß einer bevorzugten Ausführung des Verfahrens dadurch erreicht, dass die Dicke des Materialbegrenzungselements und die benetzte Fläche, insbesondere das Baufeld, derart aufeinander abgestimmt werden, dass die Strahlung, die vom Material in das Materialbegrenzungselement reflektiert und an der der benetzten Fläche abgewandten Fläche, insbesondere Strahleneintrittsfläche des Materialbegrenzungselements durch Totalreflexion reflektiert wird, nicht direkt in die benetzte Fläche bzw. das Baufeld zurückreflektiert wird.

Es kann auch so vorgegangen werden, dass die Dicke des Materialbegrenzungselements und die zu verfestigende Fläche des Materials derart aufeinander abgestimmt werden, dass die Strahlung, die vom Material in das Materialbegrenzungselement reflektiert und an der der benetzten Fläche abgewandten Strahleneintrittsfläche des Materialbegrenzungselements durch Totalreflexion reflektiert wird, nicht direkt in die zu verfestigende Fläche des Materials zurückreflektiert wird.

Unter dem Begriff der zu verfestigenden Fläche ist vorzugsweise eine Kreisfläche zu verstehen, deren Durchmesser die am weitesten voneinander entfernten Punkte der zu verfestigenden Schicht verbindet.

Die Strahleneintrittsfläche ist hierbei jene Teilfläche der der benetzten Fläche abgewandten Fläche des Materialbegrenzungselements, über welche die Strahlung von einer Belichtungseinheit direkt in das Materialbegrenzungselement eintritt. Die Austrittsfläche ist diejenige Teilfläche der benetzten Fläche des Materialbegrenzungselements, über welche die Strahlung aus dem Materialbegrenzungselement in das zu verfestigende Material eintritt.

Unter dem Begriff Baufeld ist die durch die Lichtquelle bzw. die Belichtungsoptik vorgegebene maximal mögliche Austrittsfläche zu verstehen, d.h. die maximal mögliche Fläche, an welcher der Formkörper an der Bauplattform ausgebildet werden kann.

Wenn auf Grund des Materials des Materialbegrenzungselements (z.B. Glas) davon ausgegangen wird, dass der kritische Winkel, ab dem Totalreflexion auftritt, 45° beträgt, ist gemäß dem zweiten Aspekt der Erfindung vorgesehen, dass die Dicke des Materialbegrenzungselements mindestens 1/4, bevorzugt mindestens 1/3, vorzugsweise mindestens 1/2 des Durchmessers der benetzten Fläche oder der zu verfestigenden Fläche beträgt. Die Wahl einer Dicke von 1/2 der benetzen Fläche stellt bei einem kritischen Winkel von 45° sicher, dass von keinem Punkt der benetzten Fläche ein Strahl des 2. Lichts so totalreflektiert wird, dass der totalreflektierte Strahl (3. Licht) direkt in die benetzte Fläche gelangt. Als Durchmesser der benetzen oder zu verfestigenden Fläche wird hierbei der Abstand zwischen den am weitesten voneinander entfernten Punkten der Fläche verstanden.

Im Rahmen der Erfindung erfolgt die Abstimmung der Dicke des Materialbegrenzungselements dahingehend, dass dadurch der Weg, welchen die vom Material in das Materialbegrenzungselement reflektierten Strahlen zurückgelegen bis sie auf die der benetzten Fläche abgewandte Strahleneintrittsfläche auftreffen, eingestellt wird. Die Dicke korreliert hierbei derart mit der Weglänge, dass die Weglänge mit ansteigender Dicke des Materialbegrenzungselements vergrößert wird bzw. umgekehrt die Weglänge mit abnehmender Dicke des Materialbegrenzungselements verringert wird.

Unter der Dicke des Materialbegrenzungselements wird bevorzugt der kleinste Abstand zwischen dem Baufeld und der der benetzten Fläche abgewandten Strahleneintrittsfläche des Materialbegrenzungselements verstanden.

Bevorzugt beträgt der kleinste Abstand zwischen der benetzten Fläche und der der benetzten Fläche abgewandten Strahleneintrittsfläche des Materialbegrenzungselements mindestens 10 mm, bevorzugt mindestens 15 mm, bevorzugt mindestens 20 mm, bevorzugt mindestens 30 mm, wohingegen herkömmliche Materialbegrenzungselemente eine geringere Dicke aufweisen.

Eine andere bevorzugte Verfahrensführung sieht vor, dass die Dicke des Materialbegrenzungselements und die benetzte Fläche derart aufeinander abgestimmt werden, dass jegliche im kritischen Winkel oder mehr zur Grenzflächennormalen vom Material in das Materialbegrenzungselement reflektierte Strahlung auf die Seitenwände des Materialbegrenzungselements totalreflektiert wird, was insbesondere auch für einen Strahl zutrifft, der von einem einer (gegenüberliegenden) Seitenwand am weitesten entfernt liegenden Randpunkt der benetzen Fläche ausgeht, wodurch sichergestellt ist, dass kein im kritischen Winkel oder mehr in das Materialbegrenzungselement reflektierter Strahl (2. Licht) direkt in die benetzte Fläche totalreflektiert (3. Licht) wird. Der kritische Winkel beträgt beim Übergang von Glas zu Luft 41° und beim Übergang von Plexiglas zu Luft 42°. Als Seitenwände werden hierbei diejenigen Begrenzungsflächen des Materialbegrenzungselement verstanden, die weder eine Aus- noch eine Eintrittsfläche ausbilden, insbesondere die seitlichen Begrenzungsflächen des Materialbegrenzungselements, die weder eine Ein- noch eine Austrittsfläche für die Strahlung beinhalten.

Ein in eine Seitenwand totalreflektierter Strahl kann zwar durch weitere Totalreflexion wiederum in die benetzte Fläche gelangen, dies kann jedoch gemäß einer bevorzugten Verfahrensweise dadurch verhindert oder zumindest verringert werden, dass die Oberfläche mit Ausnahme der Strahleneintritts- und -austrittsfläche, bevorzugt die Seitenwände, des Materialbegrenzungselements zumindest teilweise mit strahlungsabsorbierenden Eigenschaften, insbesondere mit einer zumindest bereichsweise strahlungsabsorbierenden Schicht versehen sind. Die strahlungsabsorbierenden Eigenschaften beziehen sich hierbei auf die Absorption im Wellenlängenbereich der für die Bestrahlung und Verfestigung des photopolymerisierbaren Materials verwendeten Strahlung.

Weiters kann das Auftreten von Totalreflexion an der Grenzfläche auch dadurch reduziert werden, dass, wie dies einer bevorzugten Ausführung der Erfindung entspricht, die Oberfläche, bevorzugt die der benetzten Fläche abgewandte Strahleneintrittsfläche des Materialbegrenzungselements zumindest teilweise mit antireflektierenden Eigenschaften, insbesondere mit einer antireflektierenden Schicht versehen ist.

Das erfindungsgemäße Verfahren kann im Rahmen eines Verfahrens zum schichtweisen Aufbau eines Formkörpers aus photopolymerisierbarem, diffus reflektierenden Material, insbesondere einem Harz mit keramischem Füllstoff, verwendet werden, bei dem nacheinander Formkörperschichten übereinander ausgebildet werden, indem jeweils auf dem Materialbegrenzungselement eine Materialschicht vorgegebener Dicke des photopolymerisierbaren Materials ausgebildet wird und eine Bauplattform oder der an der Bauplattform zumindest teilweise aufgebaute Formkörper in die Materialschicht abgesenkt wird, sodass sich zwischen der Bauplattform bzw. dem Formkörper und dem Materialbegrenzungselement eine zu verfestigende Schicht des Materials ausbildet, die durch Bestrahlung durch das Materialbegrenzungselement hindurch ortsselektiv zur Ausbildung der gewünschten Form der Formkörperschicht verfestigt wird.

Zur Lösung der der Erfindung zugrunde liegenden Aufgabe ist gemäß einem dritten Aspekt der Erfindung weiters bei einer Vorrichtung der eingangs genannten Art vorgesehen, dass die Dicke des Materialbegrenzungselements und die benetzbare Fläche, insbesondere das Baufeld, derart aufeinander abgestimmt sind, dass weniger als 40%, bevorzugt weniger als 30%, besonders bevorzugt weniger als 20%, insbesondere weniger als 10%, der vom Material in das Materialbegrenzungselement reflektierten Strahlung im Materialbegrenzungselement oder an dessen Oberflächen in das Material, insbesondere in das Baufeld bzw. in die zu verfestigende Fläche zurückreflektiert wird.

Gemäß einem vierten Aspekt der Erfindung ist bei einer Vorrichtung der eingangs genannten Art im Wesentlichen vorgesehen, dass die Dicke des Materialbegrenzungselements und die benetzbare Fläche, insbesondere das Baufeld, derart aufeinander abgestimmt sind, dass die Dicke des Materialbegrenzungselements mindestens 1/4, bevorzugt mindestens 1/3, bevorzugt mindestens 1/2 des Durchmessers der benetzbaren Fläche, insbesondere des Baufelds, entspricht.

Vorzugsweise sind die Dicke des Materialbegrenzungselements und die benetzbare Fläche, insbesondere das Baufeld, derart aufeinander abgestimmt, dass die Strahlung, die vom Material in das Materialbegrenzungselement reflektiert und an der der benetzbaren Fläche abgewandten Fläche, insbesondere Strahleneintrittsfläche des Materialbegrenzungselements durch Totalreflexion reflektiert wird, nicht direkt in die benetzbare Fläche, insbesondere in das Baufeld zurückreflektiert wird.

Vorzugsweise beträgt der kleinste Abstand zwischen dem Baufeld und der der benetzbaren Fläche abgewandten Strahleneintrittsfläche mindestens 10mm, bevorzugt mindestens 15 mm, bevorzugt mindestens 20 mm, bevorzugt mindestens 30 mm.

Mit Vorteil sind die Dicke des Materialbegrenzungselements und die benetzbare Fläche derart aufeinander abgestimmt, dass die im kritischen Winkel oder mehr vom Material in das Materialbegrenzungselement reflektierte Strahlung, auf die Seitenwände des Materialbegrenzungselements totalreflektiert wird.

Die Oberfläche mit Ausnahme der Strahleneintritts- und -austrittsfläche, bevorzugt die Seitenwände, des Materialbegrenzungselements sind vorzugsweise zumindest teilweise mit strahlungsabsorbierenden Eigenschaften, insbesondere mit einer zumindest bereichsweise strahlungsabsorbierenden Schicht versehen.

Bevorzugt ist vorgesehen, dass die Oberfläche, bevorzugt die der benetzbaren Fläche abgewandte Strahleneintrittsfläche des Materialbegrenzungselements zumindest teilweise mit antireflektierenden Eigenschaften, insbesondere mit einer antireflektierenden Schicht versehen ist.

Um das Ablösen der verfestigten Materialschicht zu erleichtern, weist das Materialbegrenzungselement eine elastische Schicht auf, welche die benetzbare Fläche ausbildet. Je nach Ausführung kann diese Schicht wenige 100 µm bis einige mm dick sein.

Vorzugsweise umfasst das Materialbegrenzungselement einen transparenten Block aus Glas oder Polymethylmethacrylat (Acrylglas).

Gemäß einem weiteren Aspekt der Erfindung umfasst diese eine Vorrichtung zum schichtweisen Aufbau eines Formkörpers aus photopolymerisierbarem Material, insbesondere einem Harz mit keramischem Füllstoff, umfassend
- ein Materialbegrenzungselement, insbesondere eine Wanne mit einem zumindest bereichsweise lichtdurchlässigen Boden, in die photopolymerisierbares Material einfüllbar ist,
- eine über dem Materialbegrenzungselement gehaltene, insbesondere in einstellbarer Höhe gehaltene, Rakel zum Ausbilden einer Materialschicht auf dem Materialbegrenzungselement, wobei zur Höhenverstellung eine Stelleinheit vorgesehen ist,
- eine Bauplattform, die in einstellbarer Höhe über dem Materialbegrenzungselement gehalten ist,
- eine Bestrahlungseinheit, die zur ortsselektiven Bestrahlung einer zwischen der Unterseite der Bauplattform oder dem teilweise fertiggestellten Formkörper und dem Materialbegrenzungselement ausgebildeten Formkörperschicht ansteuerbar ist,
- einen elektronischen Speicher für ein virtuelles dreidimensionales Modell der Formkörperschichten und des daraus aufgebauten Formkörpers,
- eine Steuereinheit, der das virtuelle Modell der Formkörperschichten zugeführt ist und die dazu ausgebildet ist, in aufeinanderfolgenden Bestrahlungsschritten übereinanderliegende Formkörperschichten auf der Bauplattform jeweils mit vorgegebener Geometrie durch Steuerung der Bestrahlungseinheit zu polymerisieren,
wobei die Vorrichtung die Merkmale der erfindungsgemäßen Verfestigungsvorrichtung einschließt.

Die Erfindung wird im folgenden anhand von in der Zeichnung schematisch dargestellten Ausführungsbeispielen näher erläutert. In dieser zeigen
Fig. 1 bis 3 eine Schnittansicht einer Vorrichtung zum schichtweisen Aufbau eines Formkörpers in aufeinanderfolgenden Phasen des Verfahrensablaufs,
Fig. 4 Reflexion und Totalreflexion im Materialbegrenzungselement von durch das Material diffus reflektiertem Licht,
Fig. 5 den beispielhaften Pfad eines Lichtstrahls, der von der Strahlungsquelle emittiert, durch das Material diffus reflektiert, an der der benetzbaren Fläche abgewandten Strahleneintrittsfläche des Materialbegrenzungselements total reflektiert wird und zum Material zurückgelangt,
Fig. 6 den beispielhaften Pfad eines Lichtstrahls, der nach diffuser Reflexion durch Mehrfachreflexion zum Material zurückgelangt,
Fig. 7 den beispielhaften Pfad eines Lichtstrahls, der durch Einsatz eines Absorbers nach diffuser Reflexion nicht durch Mehrfachreflexion zum Material zurückkehren kann,
Fig. 8a-8c den beispielhaften Pfad eines Lichtstrahls, der durch Erhöhung der Dicke des Materialbegrenzungselements nach diffuser Reflexion am Material nicht mehr durch einfache Totalreflexion zum Material zurück gelangen kann, und
Fig. 9 eine bevorzugte Ausführung des Materialbegrenzungselements.

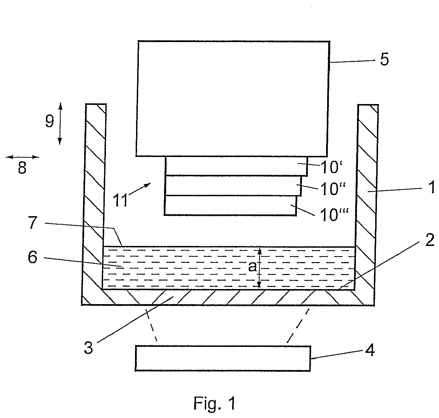

Die Funktionsweise einer Vorrichtung zur Ausführung eines Verfahrens der vorliegenden Erfindung wird zunächst unter Bezugnahme auf die Fig. 1 bis 3 beschrieben, welche eine für sich gesehen bereits aus der EP 2505341 A1 bekannte Vorrichtung zeigen. Die in Luft oder einer anderen Gasatmosphäre befindliche Vorrichtung weist eine Wanne 1 auf, deren Wannenboden 2 zumindest in einem Teilbereich 3 durchsichtig oder durchscheinend ist. Dieser Teilbereich 3 des Wannenbodens erfasst zumindest die Ausdehnung einer Belichtungseinheit 4, die unter dem Wannenboden 2 angeordnet ist. Die Belichtungseinheit 4 weist eine nicht näher dargestellte Lichtquelle und einen Lichtmodulator auf, mit dem die Intensität von einer Steuereinheit gesteuert und ortsselektiv eingestellt werden kann, um ein Belichtungsfeld mit der für die momentan zu bildende Schicht gewünschten Geometrie an dem Wannenboden 2 zu erzeugen. Alternativ kann in der Belichtungseinheit auch ein Laser verwendet werden, dessen Lichtstrahl über einen beweglichen Spiegel, der von einer Steuereinheit gesteuert wird, das Belichtungsfeld mit dem gewünschten Intensitätsmuster sukzessive abtastet.

Der Belichtungseinheit 4 gegenüber ist über der Wanne 1 eine Bauplattform 5 vorgesehen, die von einem nicht dargestellten Hubmechanismus getragen wird, so dass sie in höhenverstellbarer Weise über dem Wannenboden 2 im Bereich über der Belichtungseinheit 4 gehalten wird. Die Bauplattform 5 kann ebenfalls durchsichtig oder durchscheinend sein.

In der Wanne 1 befindet sich ein Bad aus diffus reflektierendem photopolymerisierbaren Material 6. Der Materialspiegel 7 des Bades wird durch ein geeignetes Element definiert, wie z.B. eine Rakel, welche das Material in einer bestimmten Materialschichtdicke a gleichmäßig auf den Wannenboden 2 aufträgt. Der Wanne 1 kann beispielsweise eine Führungsschiene zugeordnet sein, auf der ein Schlitten in Richtung des Doppelpfeils 8 verschieblich geführt ist. Ein Antrieb sorgt für die Hin- und Herbewegung des Schlittens, der eine Halterung für eine Rakel aufweist. Die Halterung weist beispielsweise eine Führung und eine Verstelleinrichtung auf, um die Rakel in Richtung des Doppelpfeils 9 in Höhenrichtung zu verstellen. Damit kann der Abstand der Unterkante der Rakel vom Boden 2 der Wanne 1 eingestellt werden. Die Rakel kommt zum Einsatz, wenn sich die Bauplattform wie in Fig. 1 dargestellt im angehobenen Zustand befindet, und dient dazu, das Material 6 gleichmäßig unter Einstellung einer vorgegebenen Schichtdicke zu verteilen. Die sich beim Materialverteilungsvorgang ergebende Schichtdicke des Materials 6 ist durch den Abstand der Unterkante der Rakel vom Boden 2 der Wanne 1 definiert.

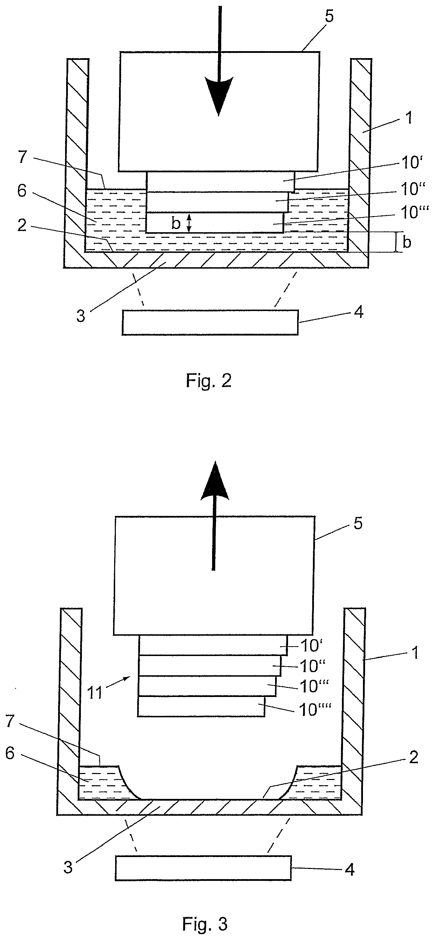

Die so entstandene Materialschichtdicke a ist dabei größer als die Formkörperschichtdicke b (Fig. 2). Zur Definition einer Schicht aus photopolymerisierbarem Material wird in folgender Weise vorgegangen. Die Bauplattform 5, an der bereits Formkörperschichten 10', 10" und 10''' ausgebildet wurden, wird, wie in Fig. 2 dargestellt, durch den Hubmechanismus in gesteuerter Weise abgesenkt, sodass die Unterseite der untersten Formkörperschicht 10''' die Oberfläche des Materialbads 6 mit Höhe a zunächst berührt, dann eintaucht und sich dem Wannenboden 2 soweit nähert, dass zwischen der Unterseite der untersten Formkörperschicht 10''' und dem Wannenboden 2 genau die gewünschte Formkörperschichtdicke b verbleibt. Während dieses Eintauchvorgangs wird photopolymerisierbares Material aus dem Zwischenraum zwischen der Unterseite der Bauplattform 5 und dem Wannenboden 2 verdrängt. Sobald sich die Formkörperschichtdicke b eingestellt hat, erfolgt die für diese Formkörperschicht spezifische ortsselektive Belichtung, um die Formkörperschicht 10'''' in der gewünschten Form auszuhärten. Nach der Bildung der Formkörperschicht 10"" wird die Bauplattform 5 mittels des Hubmechanismus wieder angehoben, was den in Fig. 3 gezeigten Zustand herbeiführt. Das photopolymerisierbare Material 6 ist im belichteten Bereich nicht mehr vorhanden.

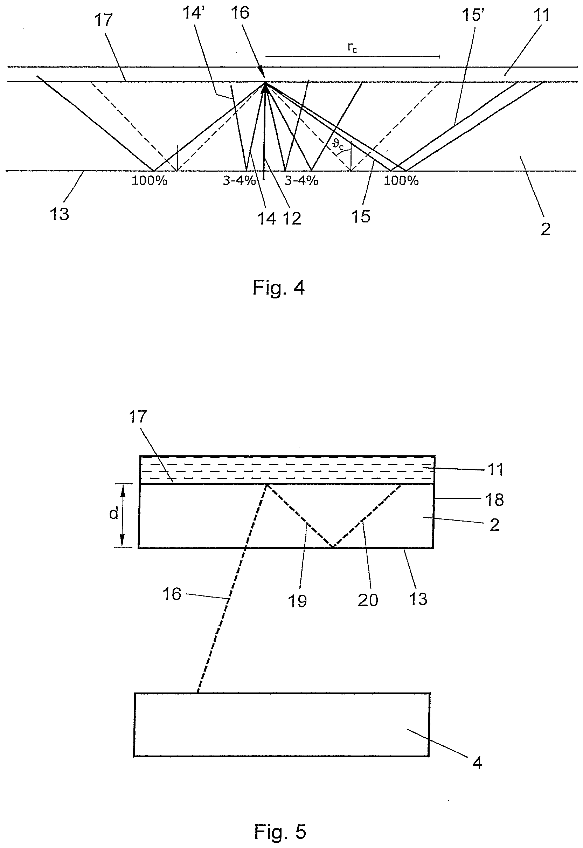

Diese Schritte werden nachfolgend mehrfach wiederholt, um weitere Formkörperschichten 10 aus photopolymerisierbarem Material zu erhalten. Der Abstand der Unterseite der zuletzt gebildeten Formkörperschicht 10 zum Wannenboden 2 wird auf die gewünschte Formkörperschichtdicke b eingestellt und daraufhin das photopolymerisierbare Material in der gewünschten Weise ortsselektiv ausgehärtet. In Fig. 4 ist der Wannenboden 2 sowie die den Wannenboden 2 benetzende Materialschicht 11 und das Reflexionsverhalten des Bodens schematisch dargestellt. Ein Lichtstrahl 12, der von der Belichtungseinheit 4 durch den durchsichtigen Wannenboden 2 auf die Oberfläche des photopolymerisierbaren Materials gelangt, wird zu einem signifikanten Teil diffus in den Wannenboden 2 zurück reflektiert. Das diffus reflektierte Licht wird dann von der Grenzfläche des Wannenbodens 2 zur Luft, d.h. an der Strahleneintrittsfläche 13, wiederum reflektiert. Ist der Einfallswinkel größer als der kritische Winkel ϑ_{c}, findet Totalreflexion statt. Bei Glas ist ϑ_{c} um 45°, es wird also insgesamt über die Hälfte des diffus reflektierten Lichtes zum Material zurückreflektiert.

Ein rückgestreuter Lichtstrahl kann entweder
- normal reflektiert werden: der Winkel zwischen der Grenzflächennormalen und dem Lichtstrahl 14 ist kleiner als der kritische Winkel ϑ_{c}, sodass normale Reflexion stattfindet und ein geringer Anteil 14' (wenige Prozent) des Lichtes zum Material 11 zurückreflektiert wird; oder
- total reflektiert werden: der Winkel zwischen der Grenzflächennormalen und dem Lichtstrahl 15 ist größer als der kritische Winkel ϑ_{c}, sodass Totalreflexion stattfindet und der gesamte Lichtstrahl 15' zum Material zurückreflektiert wird.

Der kritische Radius r_{c} ist der Radius des Kreises um den Austrittspunkt 16 der diffusen Reflexion im Material 11, der sich durch den kritischen Winkel als Mindestradius für das Zurückgelangen von totalreflektiertem Licht ergibt.

Wie in Abb. 5 dargestellt ist, wird Licht 16 durch den Wannenboden 2 ins photopolymerisierbare Material 11 eingestrahlt (1. Licht). Es tritt zunächst in die Eintrittsfläche 13 des Wannenbodens 2 ein und dann durch die Austrittsfläche 17 des Wannenbodens 2 in die Materialschicht 11, welche den Wannenboden 2 benetzt. Ein signifikanter Teil davon wird vom Material diffus in den Halbraum zurück reflektiert (2. Licht 19), d.h. in den Wannenboden 2 hinein. Ein signifikanter Teil davon wiederum wird von der Eintrittsfläche 13 und dem Mantel 18 des Bodens 2 über eine oder mehrere Reflexionen zum Material zurückgebracht (3. Licht 20), was bei einem Wannenboden 2 geringer Dicke ca. 50% (durch Totalreflexion) und ca. 4% (durch Reflexion) des 2. Lichts 19 ausmacht.

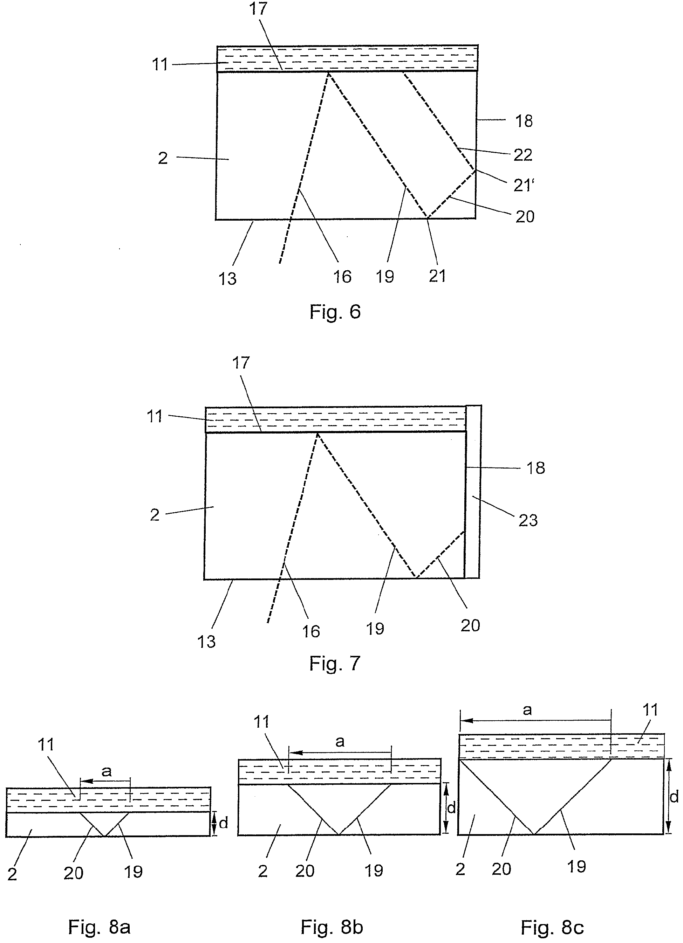

Je nach Dicke d des Wannenbodens 2 wird das Belichtungsergebnis auf unterschiedliche Art durch Totalreflexion an der Eintrittsfläche 13 des vom Material 11 diffus reflektierten Lichts beeinflusst (Fig. 8):
- geringe Dicke (Fig. 8a): Totalreflexion 20 gelangt nahezu vollständig und mit geringer Reichweite, d.h. hoher Intensität pro Fläche, zurück zum Material 11. Die Objekte werden geringfügig größer.
- mittlere Dicke (Fig. 8b): Totalreflexion 20 gelangt nahezu vollständig und mit hoher Reichweite, d.h. geringer Intensität pro Fläche, zurück. Die Objekte wachsen auch über größere Entfernungen zusammen bzw. das Material wird teilweise polymerisiert.
- hohe Dicke (Fig. 8c): Totalreflexion 20 gelangt aus geometrischen Gründen nicht direkt zur Austrittsfläche 17 zurück, kann aber durch die Mantelfläche 18 des Wannenbodens 2 dorthin reflektiert werden.

Der totalreflektierte Anteil ist generell dominant, was laterale Reichweite und Intensität anbelangt, doch bereits der normal reflektierte Anteil kann ausreichend sein, dass photopolymerisierbares Material an den falschen Stellen aushärtet.

Die Intensität des reflektierten Lichtes nimmt näherungsweise quadratisch mit der Dicke des Wannenbodens ab. Weiters wächst der kritische Radius mit der Dicke des Wannenbodens, d.h. bei 2*d* tan ϑ*_{c} > r_{F}* (*r_{F}* ist die maximale Diagonale des benetzbaren Bereichs) wird der totalreflektierte Anteil komplett aus dem Bereich der Austrittsfläche 17 geschoben.

Die Dicke des Wannenbodens 2 wird vorzugsweise also so gewählt, dass kein totalreflektiertes Licht direkt zur Austrittsfläche 17 des Wannenbodens 2 zurückgelangen kann. Das totalreflektierte Licht gelangt im beschriebenen Fall vollständig zur Mantelfläche 18 des Wannenbodens 2. Dort findet erneut, je nach Winkel, Totalreflexion 21 oder Reflexion statt, was wieder zu einer unkontrollierten Belichtung führen kann. Ist der kritische Winkel unter 45° (bei den meisten Gläsern der Fall), gibt es einen Anteil, der sogar vom Wannenboden und -mantel totalreflektiert wird und daher in voller Intensität zum Material zurückkommt. Bei steigender Wannendicke steigt das Aufkommen dieses totalreflektierten Lichtes signifikant, d.h. immer weniger Licht tritt seitlich aus der Wanne aus.

In Abb. 6 ist eine solche Mehrfachreflexion näher dargestellt. Ein diffus reflektierter Lichtstrahl wird zuerst an der Eintrittsfläche 13, dann am Mantel 18 des Wannenbodens 2 reflektiert. Je nachdem, ob es sich dabei jeweils um normale Reflexion oder Totalreflexion 21, 21' handelt, bewegt sich der zum Material zurück reflektierte Anteil zwischen wenigen Promille und 100%.

Um die oben beschriebenen Reflexionen an den Mantelflächen 18 des Wannenbodens 2, insbesondere bei wachsender Bodendicke, zu verhindern, wird bevorzugt an den Mantelflächen 18 ein Licht absorbierendes Material 23 aufgetragen. Dieser Anteil steigt mit zunehmender Bodendicke, da die Mantelfläche 18 größer wird. In Abb. 7 ist schematisch dargestellt, wie die Mehrfachreflexion eines Lichtstrahls durch eine absorbierende Schicht 23 verhindert wird.

Am Wannenboden 2 wird das Licht durch die hohe Bodendicke ausschließlich normal reflektiert. Um diesen Effekt zu verringern, kann der Wannenboden antireflektiv beschichtet werden. Die antireflektive Beschichtung kann eine klassische AR-Beschichtung sein, aber auch eine kontinuierliche Änderung des Brechungsindex (z.B. "Moth Eye"). Alternativ bzw. zusätzlich können alle Oberflächen des Wannenbodens 2 außerhalb der Eintritts- und Austrittsfläche absorptiv beschichtet werden, was auch den (nachteiligen) Lichtaustausch mit dem Rest des Strahlengangs mindert.

Aus prozesstechnischen Gründen oder um die Wartbarkeit zu erhöhen, kann der Wannenboden aus verschiedenen durchsichtigen Komponenten bestehen, die auf fixe (Kleber) oder zerlegbare (Öl) Weise verbunden sind. Komponenten können teilweise in der Maschine fix verbaut, andere leicht entfernbar sein.

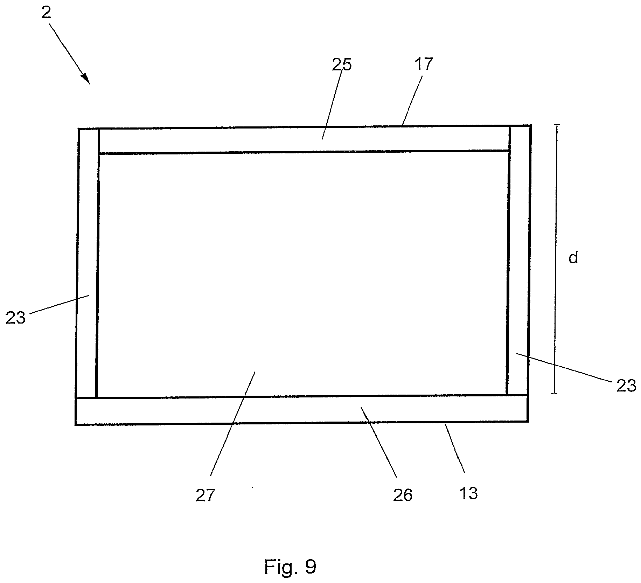

Ein bevorzugter Aufbau des Wannenbodens wird im Folgenden anhand der Fig. 9 beschrieben. Der Wannenboden 2 ist bevorzugt ein Prisma. Ein Teil der Grundfläche ist die Eintrittsfläche 13 der Strahlung, und ein Teil der Deckfläche ist die Austrittsfläche 17 der Strahlung.

Die Strahlungsquelle befindet sich unter dem Wannenboden 2. Die Projektion (d.h. Strahlung) tritt von unten durch die Grundfläche 13 in den Wannenboden 2 ein und trifft durch die Deckfläche 17 auf das photopolymerisierbare, diffus reflektierende Material 11, das die Deckfläche 17 benetzt.

Der Wannenboden 2 ist aus mehreren Schichten bzw. Bereichen aufgebaut, die bevorzugt für sich wiederum Prismen sind und deren Grund- und Deckflächen parallel zur jenen des Wannenbodens sind. Der Wannenboden 2 und das Material sind in einen Rahmen eingebaut, sodass einerseits das Material am Ausfließen gehindert und andererseits die Projektion ungehindert in den Wannenboden 2 eintreten kann.

Zwischen den Bereichen befindet sich, falls andernfalls ein Luftspalt entstehen würde, ein Kitt oder Öl als Verbindungsmaterial.

Der erste, oberste Bereich 25 des Wannenbodens 2 ist ein transparentes Material oder ein Verbund mehrerer Materialien, die Elastizität aufweisen und die Trennung der verfestigten Materialschicht vom Wannenboden 2 ermöglichen. Je nach Ausführung ist diese Schicht wenige 10 µm bis einige mm dick. Der Bereich ist von photopolymerisierbarem Material 11 benetzt.

Der zweite Bereich 27 ist ein transparenter Block, bevorzugt aus Glas oder Polymethylmethacrylat, dessen Dicke d dem halben Durchmesser des benetzten Bereiches der Deckfläche 17 entspricht. Dies verhindert Totalreflexion an der Grundfläche 13 des Wannenbodens 2, die direkt zum Material zurückreflektiert wird. Die Eintrittsfläche 13 der Strahlung ist ein Teil der Grundfläche dieses Bereichs.

Die Oberflächen des Wannenbodens 2 sind auf die im Folgenden beschriebene Art beschichtet. Die Grundfläche 13 des Wannenbodens 2 ist mit einer antireflektiven Schicht 28 versehen, die das normal reflektierte Licht signifikant abschwächt, üblicherweise auf 0,5-1%. Die Mantelfläche 18 des Wannenbodens ist absorptiv beschichtet (23), um Totalreflexion an der Mantelfläche 18 zu verhindern.

## Patentansprüche

1. Verfahren zum Verfestigen eines photopolymerisierbaren, diffus reflektierenden Materials (11) durch Bestrahlung, wobei das Material (11) ein transparentes Materialbegrenzungselement, wie z.B. eine Materialauflage oder einen Wannenboden (2), benetzt und die Bestrahlung einer zu verfestigenden Fläche durch das transparente Materialbegrenzungselement hindurch in das Material (11) erfolgt, **dadurch gekennzeichnet, dass** a) die Dicke des Materialbegrenzungselements und b) die benetzte Fläche und/oder das Baufeld und/oder die zu verfestigende Fläche des Materials derart aufeinander abgestimmt werden, dass die Dicke des Materialbegrenzungselements mindestens 1/4, bevorzugt mindestens 1/3, bevorzugt mindestens 1/2 des Durchmessers der benetzten Fläche bzw. der zu verfestigenden Fläche bzw. des Baufelds beträgt, wobei als Durchmesser der benetzen oder zu verfestigenden Fläche hierbei der Abstand zwischen den am weitesten voneinander entfernten Punkten der Fläche verstanden wird.

2. Verfahren nach Anspruch 1, **dadurch gekennzeichnet, dass** der kleinste Abstand zwischen dem Baufeld und der der benetzten Fläche abgewandten Strahleneintrittsfläche (13) mindestens 10 mm, bevorzugt mindestens 15 mm, bevorzugt mindestens 20 mm, bevorzugt mindestens 30 mm beträgt.

3. Verfahren nach Anspruch 1 oder 2, **dadurch gekennzeichnet, dass** die Dicke des Materialbegrenzungselements und die benetzte Fläche derart aufeinander abgestimmt werden, dass jegliche im kritischen Winkel oder mehr vom Material (11) in das Materialbegrenzungselement reflektierte Strahlung auf die Seitenwände des Materialbegrenzungselements totalreflektiert wird.

4. Verfahren nach einem der Ansprüche 1 bis 3, **dadurch gekennzeichnet, dass** die Oberfläche mit Ausnahme der Strahleneintritts- und -austrittsfläche (13, 17), bevorzugt die Seitenwände des Materialbegrenzungselements zumindest teilweise mit strahlungsabsorbierenden Eigenschaften, insbesondere mit einer zumindest bereichsweise strahlungsabsorbierenden Schicht versehen sind.

5. Verfahren nach einem der Ansprüche 1 bis 4, **dadurch gekennzeichnet, dass** die Oberfläche, bevorzugt die der benetzten Fläche abgewandte Strahleneintrittsfläche (13) des Materialbegrenzungselements zumindest teilweise mit antireflektierenden Eigenschaften, insbesondere mit einer antireflektierenden Schicht versehen ist.

6. Verfahren zum schichtweisen Aufbau eines Formkörpers aus photopolymerisierbarem, diffus reflektierenden Material (11), insbesondere einem Harz mit keramischem oder metallischem Füllstoff, bei dem nacheinander Formkörperschichten (10, 10', 10", 10"', 10"") übereinander ausgebildet werden, indem jeweils auf dem Materialbegrenzungselement eine Materialschicht vorgegebener Dicke (a) des photopolymerisierbaren Materials (11) ausgebildet wird und eine Bauplattform (5) oder der an der Bauplattform (5) zumindest teilweise aufgebaute Formkörper in die Materialschicht abgesenkt wird, sodass sich zwischen der Bauplattform (5) bzw. dem Formkörper und dem Materialbegrenzungselement eine zu verfestigende Schicht des Materials ausbildet, die durch Bestrahlung durch das Materialbegrenzungselement hindurch ortsselektiv zur Ausbildung der gewünschten Form der Formkörperschicht (10, 10', 10", 10"', 10"") verfestigt wird, wobei die Verfestigung mit einem Verfahren nach einem der Ansprüche 1 bis 5 durchgeführt wird.

7. Vorrichtung zum Verfestigen eines photopolymerisierbaren, diffus reflektierenden Materials (11) durch Bestrahlung, insbesondere zur Durchführung eines Verfahrens nach einem der Ansprüche 1 bis 6, wobei ein transparentes Materialbegrenzungselement, wie z.B. eine Materialauflage oder einen Wannenboden (2), mit dem Material (11) benetzbar ist und unterhalb des Materialbegrenzungselements eine Strahlungsquelle angeordnet ist, um eine zu verfestigenden Fläche durch das transparente Materialbegrenzungselement hindurch zu bestrahlen, **dadurch gekennzeichnet, dass** die Dicke des Materialbegrenzungselements und die benetzbare Fläche, insbesondere das Baufeld, derart aufeinander abgestimmt sind, dass die Dicke des Materialbegrenzungselements mindestens 1/4, bevorzugt mindestens 1/3, bevorzugt mindestens 1/2 des Durchmessers der benetzbaren Fläche, insbesondere des Baufelds, entspricht, wobei als Durchmesser hierbei der Abstand zwischen den am weitesten voneinander entfernten Punkten der Fläche verstanden wird.

8. Vorrichtung nach Anspruch 7, **dadurch gekennzeichnet, dass** der kleinste Abstand zwischen dem Baufeld und der der benetzbaren Fläche abgewandten Strahleneintrittsfläche (13) mindestens 10 mm, bevorzugt mindestens 15 mm, bevorzugt mindestens 20 mm, bevorzugt mindestens 30 mm beträgt.

9. Vorrichtung nach Anspruch 7 oder 8, **dadurch gekennzeichnet, dass** die Dicke des Materialbegrenzungselements und die benetzbare Fläche, insbesondere das Baufeld, derart aufeinander abgestimmt sind, dass jegliche im kritischen Winkel oder mehr vom Material (11) in das Materialbegrenzungselement reflektierte Strahlung auf die Seitenwände des Materialbegrenzungselements totalreflektiert wird.

10. Vorrichtung nach einem der Ansprüche 7 bis 9, **dadurch gekennzeichnet, dass** die Oberfläche mit Ausnahme der Strahleneintritts- und -austrittsfläche (13, 17), bevorzugt die Seitenwände des Materialbegrenzungselements zumindest teilweise mit strahlungsabsorbierenden Eigenschaften, insbesondere mit einer zumindest bereichsweise strahlungsabsorbierenden Schicht versehen sind.

11. Vorrichtung nach einem der Ansprüche 7 bis 10, **dadurch gekennzeichnet, dass** die Oberfläche, bevorzugt die der benetzbaren Fläche abgewandte Strahleneintrittsfläche (13) des Materialbegrenzungselements zumindest teilweise mit antireflektierenden Eigenschaften, insbesondere mit einer antireflektierenden Schicht versehen ist.

12. Vorrichtung nach einem der Ansprüche 7 bis 11, **dadurch gekennzeichnet, dass** das Materialbegrenzungselement eine elastische Schicht aufweist, welche die benetzbare Fläche ausbildet.

13. Vorrichtung nach einem der Ansprüche 7 bis 12, **dadurch gekennzeichnet, dass** das Materialbegrenzungselement einen transparenten Block aus Glas oder Polymethylmethacrylat umfasst.

## Claims

1. A method for solidifying a photopolymerizable, diffusely reflecting material (11) by irradiation, wherein the material (11) coats a transparent material confining element, such as a material support or a tank bottom (2), and the irradiation of a surface to be solidified is performed through the transparent material confining element into the material (11), **characterized in that** a) the thickness of the material confining element and b) the coated surface and/or the construction field and/or the surface to be solidified of the material are adapted to one another such that the thickness of the material confining element is at least 1/4, preferably at least 1/3, preferably at least 1/2, of the diameter of the coated surface, or the surface to be solidified, or the construction field, respectively, wherein by the diameter of the coated surface or surface to be solidified, the distance between the points that are farthest apart from each other, of the surface is understood.

2. A method according to claim 1, **characterized in that** the smallest distance between the construction field and the radiation entry surface (13) facing away from the coated surface is at least 10mm, preferably at least 15mm, preferably at least 20mm, preferably at least 30mm.

3. A method according to claim 1 or 2, **characterized in that** the thickness of the material confining element and the coated surface are adapted to each other such that any radiation reflected from the material (11) into the material confining element at the critical angle or more is totally internally reflected on the side walls of the material confining element.

4. A method according to any one of claims 1 to 3, **characterized in that** the surface except for the radiation entry and exit surfaces (13, 17), preferably the side walls, of the material confining element are at least partially provided with radiation-absorbing properties, in particular with a layer that absorbs radiation at least in certain areas.

5. A method according to any one of claims 1 to 4, **characterized in that** the surface, preferably the radiation entry surface (13) facing away from the coated surface, of the material confining element is at least partially provided with antireflection properties, in particular with an antireflective layer.

6. A method for the layered construction of a shaped body from a photopolymerizable, diffusely reflecting material (11), in particular a resin with ceramic or metallic filler, wherein shaped body layers (10, 10', 10", 10''', 10'''') are successively formed one above the other by respectively forming on the material confining element a material layer of pregiven thickness (a) of the photopolymerizable material (11), and a construction platform (5), or the shaped body at least partially built on the construction platform (5), is lowered into the material layer such that, between the construction platform (5), or the shaped body, and the material confining element a layer to be solidified of the material is formed, which is position-selectively solidified by irradiation through the material confining element to provide the desired shape of the shaped body layer (10, 10', 10'', 10''', 10''''), wherein solidification is carried out by a method according to any one of claims 1 to 5.

7. A device for solidifying a photopolymerizable, diffusely reflecting material (11) by irradiation, in particular for carrying out a method according to any one of claims 1 to 6, wherein a transparent material confining element, such as a material support or a tank bottom (2) is coatable by the material (11) and a radiation source is arranged below the material confining element for irradiating a surface to be solidified through the transparent material confining element, **characterized in that** the thickness of the material confining element and the coatable surface, in particular the construction field, are adapted to each other such that the thickness of the material confining element corresponds to at least 1/4, preferably at least 1/3, preferably at least 1/2, of the diameter of the coatable surface, in particular the construction field, wherein by the diameter of the coated surface or surface to be solidified, the distance between the points that are farthest apart from each other, of the surface is understood.

8. A device according to claim 7, **characterized in that** the smallest distance between the construction field and the radiation entry surface (13) facing away from the coatable surface is at least 10mm, preferably at least 15mm, preferably at least 20mm, preferably at least 30mm.

9. A device according to claim 7 or 8, **characterized in that** the thickness of the material confining element and the coatable surface, in particular the construction field, are adapted to each other such that any radiation reflected from the material (11) into the material confining element at the critical angle or more is totally internally reflected on the side walls of the material confining element.

10. A device according to any one of claims 7 to 9, **characterized in that** the surface except for the radiation entry and exit surfaces (13, 17), preferably the side walls, of the material confining element are at least partially provided with radiation-absorbing properties, in particular with a layer that absorbs radiation at least in certain areas.

11. A device according to any one of claims 7 to 10, **characterized in that** the surface, preferably the radiation entry surface (13) facing away from the coatable surface, of the material confining element is at least partially provided with antireflection properties, in particular with an antireflective layer.

12. A device according to any one of claims 7 to 11, **characterized in that** the material confining element comprises an elastic layer forming the coatable surface.

13. A device according to any one of claims 7 to 12, **characterized in that** the material confining element comprises a transparent block of glass or polymethylacrylate.

## Revendications

1. Procédé de durcissement d'un matériau photopolymérisable à réflexion diffuse (11) au moyen d'un rayonnement, dans lequel le matériau (11) enduit un élément de délimitation de matériau transparent, par exemple un support de matériau ou un fond de cuve (2), et le rayonnement d'une surface à durcir a lieu à travers l'élément de délimitation de matériau transparent dans le matériau (11), **caractérisé en ce que** a) l'épaisseur de l'élément de délimitation de matériau et b) la surface enduite et/ou la zone de construction et/ou la surface à durcir du matériau sont adaptées l'une à l'autre de sorte que l'épaisseur de l'élément de délimitation de matériau est au moins 1/4, de préférence au moins 1/3, de préférence au moins 1/2 du diamètre de la surface enduite ou de la surface à durcir ou de la zone de construction, dans lequel le diamètre de la surface enduite ou à durcir est entendu ici comme la distance entre les points de la surface les plus éloignés les uns des autres.

2. Procédé selon la revendication 1, **caractérisé en ce que** la plus petite distance entre la zone de construction et la surface d'entrée de rayonnement (13) opposée à la surface enduite est d'au moins 10 mm, de préférence d'au moins 15 mm, de préférence d'au moins 20 mm, de préférence d'au moins 30 mm.

3. Procédé selon la revendication 1 ou 2, **caractérisé en ce que** l'épaisseur de l'élément de délimitation de matériau et la surface enduite sont adaptées l'une à l'autre de sorte que tout rayonnement réfléchi à un angle critique ou plus du matériau (11) dans l'élément de délimitation de matériau est totalement réfléchi sur les parois latérales de l'élément de délimitation de matériau.

4. Procédé selon l'une quelconque des revendications 1 à 3, **caractérisé en ce que** la surface, à l'exception de la surface d'entrée de rayonnement et de sortie de rayonnement (13, 17), de préférence les parois latérales de l'élément de délimitation de matériau, sont au moins partiellement dotées de propriétés d'absorption de rayonnement, en particulier d'une couche absorbant le rayonnement au moins dans certaines zones.

5. Procédé selon l'une quelconque des revendications 1 à 4, **caractérisé en ce que** la surface, de préférence la surface d'entrée de rayonnement (13) de l'élément de délimitation de matériau éloignée de la surface enduite, est au moins partiellement dotée de propriétés antireflet, en particulier d'une couche antireflet.

6. Procédé de construction par couches d'un corps moulé en matériau photopolymérisable à réflexion diffuse (11), en particulier une résine avec une charge céramique ou métallique, dans lequel des couches de corps moulé (10, 10', 10", 10"', 10"") sont réalisées successivement les unes au-dessus des autres, en ce qu'une couche de matériau d'une épaisseur prédéterminée (a) du matériau photopolymérisable (11) est réalisée sur l'élément de délimitation de matériau dans chaque cas, et une plateforme de construction (5) ou le corps moulé au moins partiellement construit sur la plateforme de construction (5) est abaissé dans la couche de matériau, de sorte qu'une couche du matériau à durcir est réalisée entre la plateforme de construction (5) ou le corps moulé et l'élément de délimitation de matériau, qui est durcie par rayonnement à travers l'élément de délimitation de matériau de manière sélective en fonction de l'emplacement pour réaliser la forme souhaitée de la couche du corps moulé (10, 10', 10", 10"', 10""), dans lequel le durcissement est mis en œuvre par un procédé selon l'une quelconque des revendications 1 à 5.

7. Dispositif de durcissement par rayonnement d'un matériau photopolymérisable à réflexion diffuse (11), en particulier pour la mise en œuvre d'un procédé selon l'une quelconque des revendications 1 à 6, dans lequel un élément de délimitation de matériau transparent, par exemple un support de matériau ou un fond de cuve (2), peut être enduit avec le matériau (11) et une source de rayonnement est disposée sous l'élément de délimitation de matériau afin d'irradier une surface à durcir à travers l'élément de délimitation de matériau transparent, **caractérisé en ce que** l'épaisseur de l'élément de délimitation de matériau et la surface pouvant être enduite, en particulier la zone de construction, sont coordonnées entre elles de sorte que l'épaisseur de l'élément de délimitation de matériau correspond à au moins 1/4, de préférence au moins 1/3, de préférence au moins 1/2 du diamètre de la surface pouvant être enduite, en particulier de la zone de construction, dans lequel le diamètre est ici entendu comme la distance entre les points de la surface les plus éloignés les uns des autres.

8. Dispositif selon la revendication 7, **caractérisé en ce que** la plus petite distance entre la zone de construction et la surface d'entrée de rayonnement (13) opposée à la surface pouvant être enduite est d'au moins 10 mm, de préférence d'au moins 15 mm, de préférence d'au moins 20 mm, de préférence d'au moins 30 mm.

9. Dispositif selon la revendication 7 ou 8, **caractérisé en ce que** l'épaisseur de l'élément de délimitation de matériau et la surface pouvant être enduite, en particulier la zone de construction, sont adaptées l'une à l'autre de sorte que tout rayonnement réfléchi à un angle critique ou plus du matériau (11) dans l'élément de délimitation de matériau est totalement réfléchi sur les parois latérales de l'élément de délimitation de matériau.

10. Dispositif selon l'une quelconque des revendications 7 à 9, **caractérisé en ce que** la surface, à l'exception de la surface d'entrée de rayonnement et de sortie de rayonnement (13, 17), de préférence les parois latérales de l'élément de délimitation de matériau, sont au moins partiellement dotées de propriétés d'absorption de rayonnement, en particulier d'une couche absorbant le rayonnement au moins dans certaines zones.

11. Dispositif selon l'une quelconque des revendications 7 à 10, **caractérisé en ce que** la surface, de préférence la surface d'entrée de rayonnement (13) de l'élément de délimitation de matériau éloignée de la surface pouvant être enduite, est au moins partiellement dotée de propriétés antireflet, en particulier d'une couche antireflet.

12. Dispositif selon l'une quelconque des revendications 7 à 11, **caractérisé en ce que** l'élément de délimitation de matériau présente une couche élastique, laquelle réalise la surface pouvant être enduite.

13. Dispositif selon l'une quelconque des revendications 7 à 12, **caractérisé en ce que** l'élément de délimitation de matériau comprend un bloc transparent de verre ou de polyméthacrylate de méthyle.
